# EUROPEAN PATENT SPECIFICATION

(11) **EP 2 381 648 B1**
(45) Date of publication and mention of the grant of the patent: **29.03.2017**
(21) Application number: 11162910.1
(22) Date of filing: 18.04.2011
(51) Int. Cl.: H04L 29/08

(54) **Field communication system and field communication method**
Feldkommunikationssystem und Feldkommunikationsverfahren
Système et procédé de communication de champ

(30) Priority: 22.04.2010 JP 2010098442
(43) Date of publication of application: 26.10.2011
(73) Proprietor: Yokogawa Electric Corporation, Tokyo 180-8750 (JP)
(72) Inventor: Nakamoto, Yasuyuki, Tokyo (JP); Emori, Toshiyuki, Tokyo (JP); Umemoto, Hideki, Tokyo (JP); Mori, Hiroshi, Tokyo (JP)
(74) Representative: Henkel, Breuer & Partner

(56) References cited:
- EP-A2- 2 354 869
- WO-A1-2009/072699
- WO-A2-2007/079279
- US-A1- 2008 320 137
- US-A1- 2009 292 915

## Description

### BACKGROUND OF THE INVENTION

### Field of the Invention

The present invention relates to a field communication system and a field communication method that transmits and receives process data with field devices through a wireless communication.

WO 2007/079279 discloses a dynamic sensor network registry.

### Description of the Related Art

When accessing a wireless field device that is based on the ISA100.11a field wireless standard, a distributed field control system accesses internal parameters of the wireless field device via a gateway that is based on the ISA100.11a field wireless standard.

To make the field device participate in an ISA100.11a field communication system, it is necessary to set data of a wireless network to the field device beforehand. Also, a system manager stores data that is set to the filed device. Only when the data that is set to the field device and the data that is stored in the system manager coincide, the system manager allows the field device to participate in the network.

EUI-64 is set to the field device when shipped from a factory. EUI-64 is an identifier with numerical data of 64 bit that is allocated to the field device. Also, apart from EUI-64, a network ID, a join key, and a device tag are set to the field device before the field device participates in the network. The network ID specifies a wireless network that the field device participates in. The join key is a password to ensure security when the connection is allowed.

The system manager loads the data that is set to the field device through an engineering tool. When the field device participates in the wireless network, the system manager receives data, which is set to the field device, from the field device, and searches data of the field device that has been stored in the system manager. The searching is performed by using EUI-64 as a key, and whether or not the data stored in the system manager and the data received from the field device are accordant is determined.

In a large-scale system, provisioning of the field device and engineering of the system manager are performed in parallel. Operators who operate a provisioning device to perform the provisioning and operators who operate an engineering tool to perform the engineering are different. The number of the field devices may be in an order of several thousands. In this case, it is difficult to properly set the data to both the field device and the system manager by using the provisioning device and the engineering tool. An engineering mistake such as a typing mistake may occur.

To prevent the mistake, the provisioning of the field device may be performed by using the engineering tool. In a large-scale system, the operations are necessary to be performed by a plurality of operators using a plurality of provisioning devices. Therefore, it is not realistic to operate the provisioning of the field device by using the engineering tool.

### SUMMARY

A field communication system may include a communication device that transmits and receives data, which is necessary in field control, to and from a field device through a wireless communication, the communication device communicating with the field device if field device data corresponds to communication device data, the field device data being set to the field device, the communication device data being set to the communication device, a field device setting unit that generates the field device data related to a device tag of the field device, the field device setting unit setting the field device data to the field device, a storage unit that stores the field device data that has been generated by the field device setting unit, and a communication device setting unit that extracts the field device data stored in the storage unit by using the device tag as a key, the communication device setting unit setting the field device data to the communication device as the communication device data.

A field control system may include field devices each of which is arranged in a plant, each of the field devices performing a wireless communication, a provisioning device that is connected to one of the field devices, the provisioning device generating provisioning data related to the one of the filed devices, a management terminal device that receives the provisioning data to generate a desired list based on a device tag that is attached to the one of the field devices, a database that is connected to the management terminal, the database storing the desired list; a gateway device that is connected to the management terminal, the gateway device including a backbone router that communicates with the field devices through the wireless communication, and a system manager that receives the desired list from the database, the system manager receiving the provisioning data related to the one of the filed devices from the one of the field devices through the backbone router and the wireless communication, the system manager allowing the wireless communication between the backbone router and the one of the field devices if the desired list corresponds to the provisioning data.

A field communication method may include communicating between a field device and a communication device through a wireless communication, determining whether or not field device data corresponds to communication device data, the field device data being set to the field device, the communication device data being set to the communication device, allowing the communicating between the field device and the communication device if the field device data corresponds to the communication device data, generating the field device data related to a device tag of the field device, setting the field device data to the field device, storing the field device data that has been generated, extracting the field device data, which has been stored, by using the device tag as a key, and setting the field device data to the communication device as the communication device data.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a block diagram illustrating a configuration example of a distributed field control system including a field communication system in accordance with a first preferred embodiment of the present invention;
FIG. 2 is a view illustrating an example of an operation of the distributed field control system including the field communication system in accordance with the first preferred embodiment of the present invention;
FIG. 3 is a view illustrating an example of a provisioning data file in accordance with the first preferred embodiment of the present invention;
FIG. 4 is a view illustrating an example of a desired list in accordance with the first preferred embodiment of the present invention; and
FIG. 5 is a flow chart illustrating an example of the operation of the distributed field control system including the field communication system in accordance with the first preferred embodiment of the present invention.

### DETAILED DESCRIPTION OF THE PREFERRED EMBODIMENTS

The present invention will be now described herein with reference to illustrative embodiments. Those skilled in the art will recognize that many alternative embodiments can be accomplished using the teaching of the present invention and that the present invention is not limited to the embodiments illustrated herein for explanatory purposes.

A field communication system may include a communication device that transmits and receives data, which is necessary in field control, to and from a field device through a wireless communication, the communication device communicating with the field device if field device data corresponds to communication device data, the field device data being set to the field device, the communication device data being set to the communication device, a field device setting unit that generates the field device data related to a device tag of the field device, the field device setting unit setting the field device data to the field device, a storage unit that stores the field device data that has been generated by the field device setting unit, and a communication device setting unit that extracts the field device data stored in the storage unit by using the device tag as a key, the communication device setting unit setting the field device data to the communication device as the communication device data.

The communication device setting unit may determine whether or not the field device data corresponds to the communication device data.

The field device data and the communication device data may include the device tag that is attached to the field device respectively.

The field device data and the communication device data may include a join key that is generated automatically by the field device setting unit.

The field device data and the join key included in the field device data may be coded.

The communication device setting unit may decode the field device data and the join key included in the field device data before determining whether or not the field device data corresponds to the communication device data.

The field device data, which is stored in the storage unit, may be a part of a table in which a correspondence between a group of data that is necessary in field control and the device tag is established.

A field control system may include field devices each of which is arranged in a plant, each of the field devices performing a wireless communication, a provisioning device that is connected to one of the field devices, the provisioning device generating provisioning data related to the one of the filed devices, a management terminal device that receives the provisioning data to generate a desired list based on a device tag that is attached to the one of the field devices, a database that is connected to the management terminal, the database storing the desired list; a gateway device that is connected to the management terminal, the gateway device including a backbone router that communicates with the field devices through the wireless communication, and a system manager that receives the desired list from the database, the system manager receiving the provisioning data related to the one of the filed devices from the one of the field devices through the backbone router and the wireless communication, the system manager allowing the wireless communication between the backbone router and the one of the field devices if the desired list corresponds to the provisioning data.

The system manager may determine whether or not the field device data corresponds to the communication device data.

The provisioning data and the desired list may include the device tag that is attached to the field device respectively.

The provisioning data and the desired list may include a join key that is generated automatically by the provisioning device.

The provisioning data and the join key included in the provisioning data may be coded.

The system manager may decode the provisioning data and the join key included in the provisioning data before determining whether or not the provisioning data corresponds to the desired list.

The desired list may be a part of a table in which a correspondence between a group of data that is necessary in field control and the device tag is established.

A field communication method may include communicating between a field device and a communication device through a wireless communication, determining whether or not field device data corresponds to communication device data, the field device data being set to the field device, the communication device data being set to the communication device, allowing the communicating between the field device and the communication device if the field device data corresponds to the communication device data, generating the field device data related to a device tag of the field device, setting the field device data to the field device, storing the field device data that has been generated, extracting the field device data, which has been stored, by using the device tag as a key, and setting the field device data to the communication device as the communication device data.

The field device data and the communication device data may include the device tag that is attached to the field device respectively.

The field communication method may further include automatically generating a join key, the join key being included in the field device data and the communication device data.

The field communication method may further include coding the field device data and the join key included in the field device data.

The field communication method may further include decoding the field device data and the join key included in the field device data before whether or not the field device data corresponds to the communication device data is determined.

The field communication method may further include generating a table in which a correspondence between a group of data that is necessary in field control and the device tag is established, the table including the field device data that has been stored.

By using the field communication system and the field communication method in accordance with preferred embodiments of the present invention, engineering related to communications with field devices can be performed precisely and easily.

By using the field communication system and the field communication method in accordance with preferred embodiments of the present invention, field device data that is set to the field devices can be used as communication device data. Thereby, data can be set precisely without engineering mistake. Also, data is extracted from the field device data that is made to correspond to a device tag by using the device tag as a key. Thereby, engineering, by which a correspondence is established between the device tag and data such as EUI-64, is not necessary.

A first preferred embodiment of the present invention will be described.

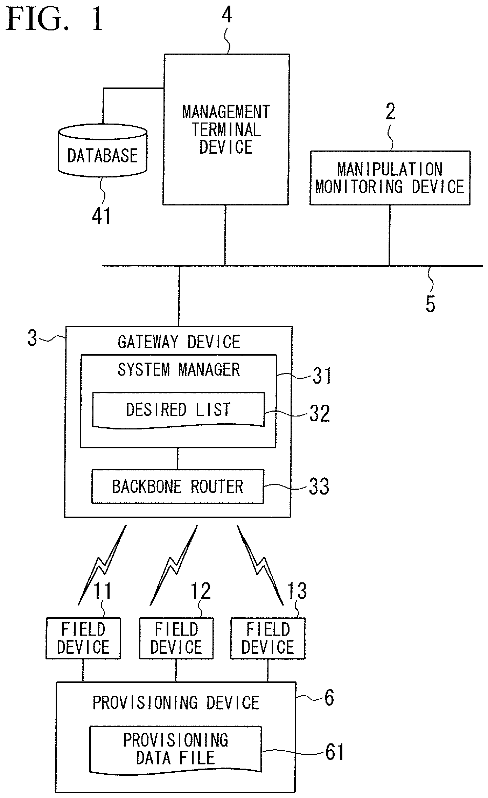

FIG. 1 is a block diagram illustrating a configuration example of a distributed field control system including a field communication system in accordance with a first preferred embodiment of the present invention.

As illustrated in FIG. 1, field devices 11, 12 and 13 having a function of wireless communication based on the ISA100.11a field wireless standard are arranged in a plant. Each of the field devices 11, 12 and 13 is connected to a manipulation monitoring device 2 through a gateway device 3 and a field bus 5. The manipulation monitoring device 2, the gateway device 3, and a management terminal device 4 are connected to the field bus 5. The management terminal device 4 performs engineering of the field control system.

Measurement values acquired at the field devices 11, 12 and 13 are transmitted from the field devices 11, 12 and 13 to the manipulation monitoring device 2 through the gateway device 3. Manipulation values are transmitted from the manipulation monitoring device 2 to the field devices 11, 12 and 13. The field devices 11, 12 and 13 and the gateway device 3 perform a wireless communication in the Publish/Subscribe manner based on the ISA100.11a field wireless standard.

The gateway device 3 is a communication device. The gateway device 3 includes a system manager 31 and a BBR (backbone router) 33. The BBR 33 performs the wireless communication with the field devices 11, 12 and 13. The gateway device 3 has a gateway function, a protocol function, a function as a system manager based on the ISA100.11a field wireless standard, and a function as a GSAP (gateway service access point) that is an interface to access the field devices 11, 12 and 13. The GSAP is specified by the ISA100.11a field wireless standard.

The system manager 31 stores a desired list 32. The desired list 32 is a list showing a correspondence between data of the field devices 11, 12 and 13 and a device tag that is attached to the respective field device. The system manager 31 checks the desired list 32 to determine whether or not to allow a connection with the field device.

The provisioning device 6 operates as a field device setting unit or a file generating unit. The provisioning device 6 generates provisioning data that is field device data by establishing a correspondence with the device tag of the field device 11, 12 and 13 so as to generate a provisioning data file 61. The provisioning device 6 sets the provisioning data to the field devices 11, 12 and 13.

The management terminal device 4 operates as a communication device setting unit. The management terminal device 4 sets the data of the field devices 11, 12 and 13 that is communication device data to the desired list 32 stored in the system manager 31 of the gateway device 3. The management terminal device 4 extracts the provisioning data from a database 41 by using the device tag as a key to generate the desired list 32 that is the communication device data. The database 41 is a storage unit that stores the provisioning data that the provisioning device 6 sets to the field device. Then the desired list 32 is set in the system manager 31.

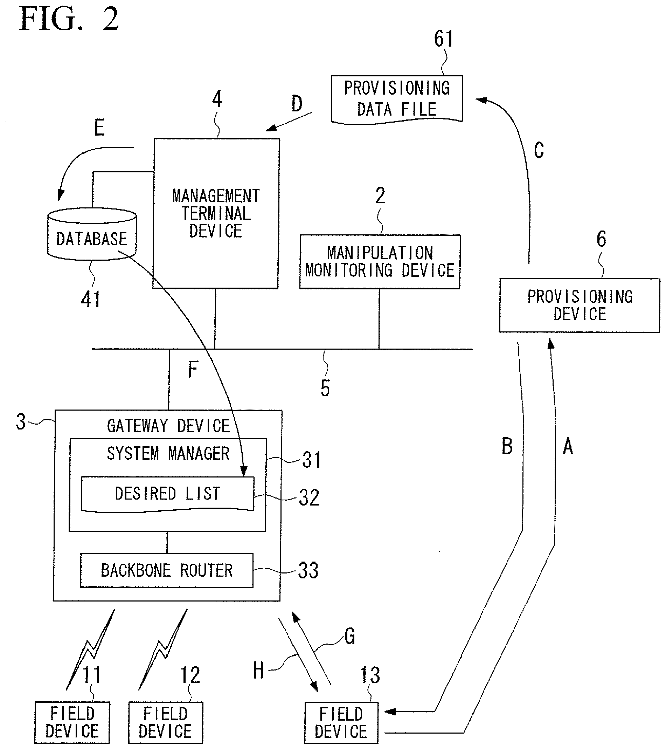

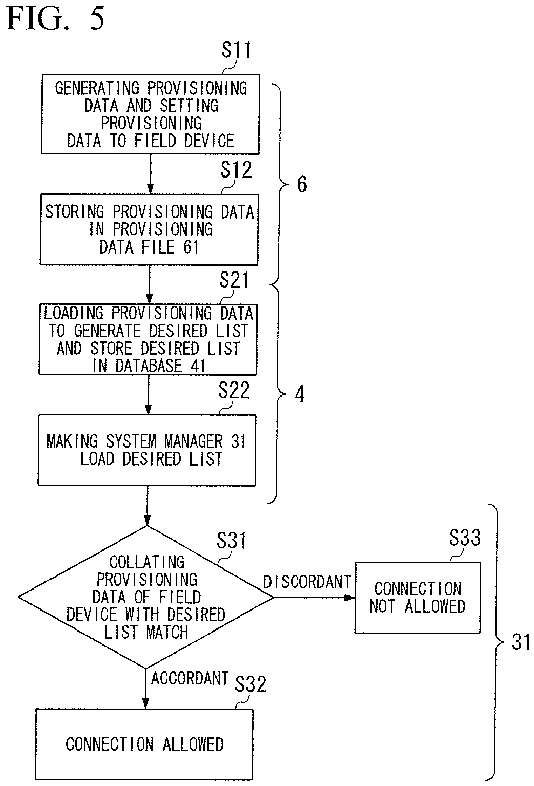

An example of an operation of the provisioning will be described by using FIG. 2. FIG. 2 is a view illustrating an example of an operation of the distributed field control system including the field communication system in accordance with the first preferred embodiment of the present invention. FIG. 5 is a flow chart illustrating an example of the operation of the distributed field control system including the field communication system in accordance with the first preferred embodiment of the present invention.

The operation of the provisioning is performed before a new field device 13 is connected to a network. The operation of the provisioning includes the provisioning of the field device 13 performed by the provisioning device 6 and the provisioning of the gateway device 13 performed by the management terminal device 4 in series. The field devices are identified by using the device tag since the plant is designed. The data of the device tag is shared by an operator who performs the provisioning of the field device 13 and an operator who performs the provisioning of the gateway device 3.

First, the operator who performs the provisioning of the field device 13 inputs to the provisioning device 6 a network ID, which specifies the network that the field device 13 is connected to, and the device tag of the field device 13.

Step S11 in FIG. 5 will be described. As illustrated in an arrow A of FIG. 2, the provisioning device 6 acquires EUI-64 from the field device 13. EUI-64 is a unique device ID that is attached to each of the field devices 11, 12 and 13 when the field devices are shipped from a factory. EUI-64 is a numerical data of 64 bit.

Then, the provisioning device 6, which receives the network ID and the device tag, automatically generates a join key based on the received EUI-64. The join key is a password to ensure security when the connection is allowed.

As illustrated in an arrow B of FIG. 2, the provisioning device 6 transmits the device tag, the network ID, and the join key to the field device 13. The provisioning device 6 sets the device tag, the network ID, and the join key to the field device 13. Thereby, EUI-64, the device tag, the network ID, and the join key are set to the field device 13 as provisioning data.

Step S12 in FIG. 5 will be described. As illustrated in an arrow C of FIG. 2, the provisioning device 6 writes the EUI-64, the device tag, the network ID, and the join key to the provisioning data file 61. In the provisioning data file 61, the EUI-64, the device tag, the network ID, and the join key correspond to each other.

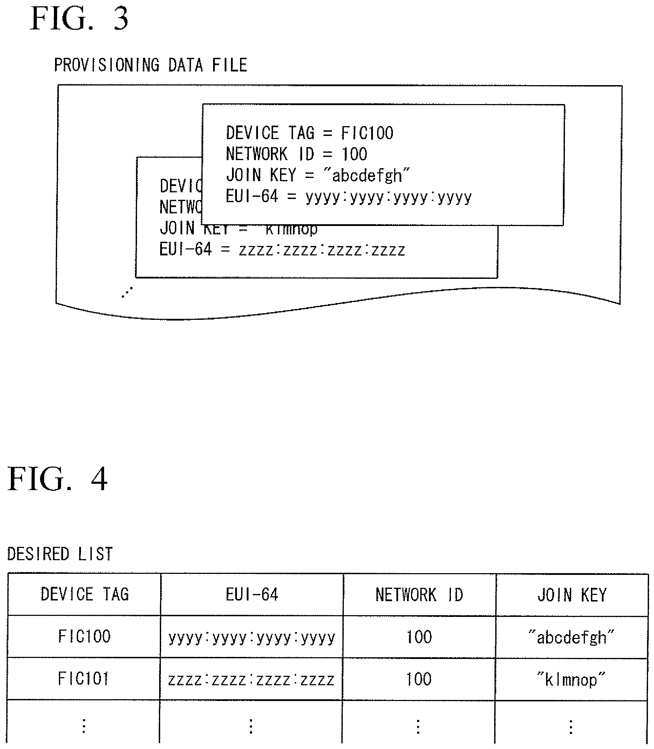

FIG. 3 is a view illustrating an example of a provisioning data file 61 in accordance with the first preferred embodiment of the present invention.

As illustrated in FIG. 3, the provisioning data file 61 includes records of the device tag, the network ID, the join key, and the EUI-64 that are the provisioning data set to each of the field devices 11, 12 and 13. Coding is made on the join key included in the provisioning data file 61. Also, coding is made on the provisioning data file 61. Thereby, the provisioning data file 61 and the join key are prevented from being decoded easily.

On the other hand, a system engineer performs engineering based on the device tag. The data of the engineering performed in the management terminal device 4 is stored in the database 41.

Step S21 in FIG. 5 will be described. First, as illustrated in an arrow D of FIG. 2, the system engineer makes the engineering tool load the coded provisioning data file 61, which is generated by the provisioning device 6. The engineering tool is mounted on the management terminal device 4. The engineering tool decodes the provisioning data file 61 to extract contents of the provisioning data file 61 by using the device tag as a key. Then, as illustrated in an arrow E of FIG. 2, the engineering tool generates a desired list 32 to be stored in the database 41. The desired list 32 is a list described as a table using the device tag as a key.

Then, in step S22 of FIG. 5, as illustrated in an arrow F of FIG. 2, the system engineer makes the system manager 31 of the gateway device 3 load and set the desired list 32.

FIG. 4 is a view illustrating an example of a desired list 32 in accordance with the first preferred embodiment of the present invention.

The desired list 32 is communication side data that is loaded on the system manager 31 of the gateway device 3. The desired list 32 is a table that extracts the device tag, the EUI-64, the network ID, and the join key from the provisioning data file 61 of FIG. 3. The device tag, the EUI-64, the network ID, and the join key in the desired list 32 correspond to each other.

By the above-described operation, the device tag, the EUI-64, the network ID, and the join key that are the provisioning data are transmitted to both the field device and the system manager 31.

Then, in step S31 of FIG. 5, if a connection allowance unit, which is not illustrated in the figures, in the system manager 31 of the gateway device 3 receives a connection request from the new field device 13 as illustrated in an arrow G of FIG. 2, then the connection allowance unit determines whether or not to allow the connection by referring the desired list 32. The connection allowance unit collates the provisioning data, which is received through a wireless communication from the field device 13 that requests the connection, with the provisioning data in the desired list 32. If both provisioning data are discordant, then the connection is not allowed as illustrated in step S33 of FIG. 5. If both provisioning data are accordant, then the connection is allowed as illustrated in step S32 of FIG. 5 and the field device 13 is connected to the network as illustrated in an arrow H of FIG. 2.

The join key included in the provisioning data is coded. Therefore, the system manager 31 decodes the join key of the provisioning data, which is received from the field device 13 that requests the connection, and the join key of the provisioning data in the desired list 32 before collating these provisioning data.

In FIG. 5, the steps S11 and S 12 are the provisioning of the field device that is performed by the provisioning device 6. The steps S21 and S22 are the provisioning of the gateway device that is performed by the management terminal 4. The steps S31, S32 and S33 correspond to the determination whether or not to allow connection with the field device that is performed by the system manager 31.

As described above, in the field communication system in accordance with the first preferred embodiment of the present invention, the desired list 32 is generated based on the provisioning data that is necessary when connection with the field device is allowed. In the field communication system in accordance with the first preferred embodiment of the present invention, the provisioning data that is set in the field device side is used. Therefore, an engineering mistake does not occur, and data can be set on the desired list 32 precisely. In the field communication system in accordance with the first preferred embodiment of the present invention, data is extracted from the provisioning data that is established a correspondence with the device tag by using the device tag as a key. Thereby, engineering, by which a correspondence is established between the device tag and data such as EUI-64, is not necessary.

The EUI-64 of the field device is not necessary to be informed in the side of the field control system. The engineering using the EUI-64 is not necessary.

The provisioning data file 61 includes the join key. The provisioning device 6 automatically generates the join key.

The provisioning data file 61 is coded and can be used outside while keeping concealment nature. Thereby, the provisioning data file 61 can be used widely in the field control system. A maintenance man of the field device can use the provisioning data file 61 as maintenance data. Statistical data related to the field device can be displayed by using the device tag.

If the provisioning data set in the field device side is updated, then the provisioning data file 61 is received in the field control system side, and the data in the desired list 32, which has already been input, is updated by using the device tag as a key.

In the first preferred embodiment of the present invention, the desired list 32 is stored in the gateway device 3, but the place where the desired list 32 is stored is arbitrary.

The provisioning data stored in the database 41 may be a part of a table showing a correspondence between a group of data, which are needed in the field control, and the device tag. Usually, in the engineering of the field control system, a table that establishes a correspondence between various data, which is needed in the field control, and the device tag is generated. The table is stored in the database 41. The provisioning data received from the provisioning data file 61 is stored in the table. Thereby, a group of data that are needed in the field control including the provisioning data can be stored in the table.

The application range of the present invention is not limited to the above-described preferred embodiments. The present invention may be widely applied to a field communication system etc. that transmits/receives process data with field devices through wireless communication.

As used herein, the following directional terms "forward, rearward, above, downward, right, left, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially," "about," "nearly", and "approximately" as used herein mean a reasonable amount of deviation of the modified term such that the end result is not significantly changed. For example, these terms can be construed as including a deviation of at least ± 5 percents of the modified term if this deviation would not negate the meaning of the word it modifies.

The term "unit" is used to describe a component, section or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A field communication system comprising:
a communication device (3) configured to transmit and receive data, which is necessary in field control, to and from a field device (11, 12, 13) through a wireless communication, the communication device (3) being configured to communicate with the field device (11, 12, 13) if field device data correspond to communication device data set to the communication device (3);
a storage unit (41) configured to store the field device data; and
a communication device setting unit (4) configured to extract the field device data stored in the storage unit (41), the communication device setting unit (4) being configured to set the field device data to the communication device (3) as the communication device data;
**characterized by** further comprising
a field device setting unit (6) configured to generate field device data related to a device tag of the field device,
the field device setting unit (6) being configured to set the field device data to the field device;
the communication device setting unit (31) being configured to extract the field device data stored in the storage unit (41) by using the device tag as a key.

2. The field communication system according to claim 1, **characterized in that** the communication device setting unit (4) is configured to determine whether or not the field device data corresponds to the communication device data.

3. The field communication system according to claim 1, **characterized in that** the field device data and the communication device data include the device tag that is attached to the field device (11, 12, 13) respectively.

4. The field communication system according to claim 1, **characterized in that** the field device data and the communication device data include a join key that is generated automatically by the field device setting unit (6).

5. The field communication system according to claim 4, **characterized in that** the field device data and the join key included in the field device data are coded.

6. The field communication system according to claim 5, **characterized in that** the communication device setting unit (4) is configured to decode the field device data and the join key included in the field device data before determining whether or not the field device data corresponds to the communication device data.

7. The field communication system according to claim 1, **characterized in that** the field device data, which is stored in the storage unit (41), is a part of a table in which a correspondence between a group of data that is necessary in field control and the device tag is established.

8. A field communication method for use with a field communication system; the system according to claim 1, the method comprising the steps:
storing the field device data; and
extracting the field device data which had been stored and setting the field device data as the communication device data;
**characterized by** further comprising
generating field device data related to a device tag of the field device,
setting the field device data to the field device; and
extracting the field device data stored in the storage unit (41) by using the device tag as a key.

## Patentansprüche

1. Feldkommunikationssystem, aufweisend:
eine Kommunikationsvorrichtung (3), die konfiguriert ist, um Daten, welche für eine Feldsteuerung erforderlich sind, zu und von einer Feldvorrichtung (11, 12, 13) durch eine drahtlose Kommunikation zu übertragen und zu empfangen, wobei die Kommunikationsvorrichtung (3) konfiguriert ist, um mit der Feldvorrichtung (11, 12, 13) zu kommunizieren, falls Feldvorrichtungsdaten zu Kommunikationsvorrichtungsdaten korrespondieren, die bezüglich der Kommunikationsvorrichtung (3) eingestellt sind,
eine Speichereinheit (41), die konfiguriert ist, um die Feldvorrichtungsdaten zu speichern, und
eine Kommunikationsvorrichtung-Einstelleinheit (4), die konfiguriert ist, um die in der Speichereinheit (41) gespeicherten Feldvorrichtungsdaten zu extrahieren, wobei die Kommunikationsvorrichtung-Einstelleinheit (4) konfiguriert ist, um die Feldvorrichtungsdaten bezüglich der Kommunikationsvorrichtung (3) als die Kommunikationsvorrichtungsdaten einzustellen,
**gekennzeichnet durch**
eine Feldvorrichtung-Einstelleinheit (6), die konfiguriert ist, um Feldvorrichtungsdaten bezogen auf ein Vorrichtungskennzeichen der Feldvorrichtung zu erzeugen,
wobei die Feldvorrichtung-Einstelleinheit (6) konfiguriert ist, um die Feldvorrichtungsdaten bezüglich der Feldvorrichtung einzustellen,
wobei die Kommunikationsvorrichtung-Einstelleinheit (31) konfiguriert ist, um die in der Speichereinheit (41) gespeicherten Feldvorrichtungsdaten unter Verwendung des Vorrichtungskennzeichens als einen Schlüssel zu extrahieren.

2. Feldkommunikationssystem nach Anspruch 1, **dadurch gekennzeichnet, dass** die Kommunikationsvorrichtung-Einstelleinheit (4) konfiguriert ist, um zu bestimmen, ob die Feldvorrichtungsdaten zu den Kommunikationsvorrichtungsdaten korrespondieren oder nicht.

3. Feldkommunikationssystem nach Anspruch 1, **dadurch gekennzeichnet, dass** die Feldvorrichtungsdaten und die Kommunikationsvorrichtungsdaten das Vorrichtungskennzeichen umfassen, das jeweils an der Feldvorrichtung (11, 12, 13) angebracht ist.

4. Feldkommunikationssystem nach Anspruch 1, **dadurch gekennzeichnet, dass** die Feldvorrichtungsdaten und die Kommunikationsvorrichtungsdaten einen Vereinigungsschlüssel umfassen, der durch die Feldvorrichtung-Einstelleinheit (6) automatisch erzeugt ist.

5. Feldkommunikationssystem nach Anspruch 4, **dadurch gekennzeichnet, dass** die Feldvorrichtungsdaten und der in den Feldvorrichtungsdaten enthaltene Vereinigungsschlüssel kodiert sind.

6. Feldkommunikationssystem nach Anspruch 5, **dadurch gekennzeichnet, dass** die Kommunikationsvorrichtung-Einstelleinheit (4) konfiguriert ist, um die Feldvorrichtungsdaten und den in den Feldvorrichtungsdaten enthaltenen Vereinigungsschlüssel zu dekodieren, bevor bestimmt wird, ob die Feldvorrichtungsdaten zu den Kommunikationsvorrichtungsdaten korrespondieren oder nicht.

7. Feldkommunikationssystem nach Anspruch 1, **dadurch gekennzeichnet, dass** die Feldvorrichtungsdaten, welche in der Speichereinheit (41) gespeichert sind, ein Teil einer Tabelle sind, in welcher eine Korrespondenz zwischen einer Gruppe von Daten, die für die Feldsteuerung erforderlich sind, und dem Vorrichtungskennzeichen aufgestellt ist.

8. Feldkommunikationsverfahren zur Verwendung mit einem Feldkommunikationssystem nach Anspruch 1, wobei das Verfahren die Schritte aufweist:
Speichern der Feldvorrichtungsdaten, und
Extrahieren der Feldvorrichtungsdaten, welche gespeichert worden sind, und Einstellen der Feldvorrichtungsdaten als die Kommunikationsvorrichtungsdaten,
**gekennzeichnet durch**
Erzeugen von Feldvorrichtungsdaten bezogen auf ein Vorrichtungskennzeichen der Feldvorrichtung,
Einstellen der Feldvorrichtungsdaten bezüglich der Feldvorrichtung, und
Extrahieren der in der Speichereinheit (41) gespeicherten Feldvorrichtungsdaten unter Verwendung des Vorrichtungskennzeichens als einen Schlüssel.

## Revendications

1. Système de communication de terrain comprenant :
un dispositif de communication (3) configuré pour transmettre et recevoir des données, qui sont nécessaires dans un contrôle de terrain, vers et depuis un dispositif de terrain (11, 12, 13) par l'intermédiaire d'une communication sans fil, le dispositif de communication (3) étant configuré pour communiquer avec le dispositif de terrain (11, 12, 13) si des données de dispositif de terrain correspondent à des données de dispositif de communication réglées sur le dispositif de communication (3) ;
une unité de stockage (41) configurée pour stocker les données de dispositif de terrain ; et
une unité de réglage de dispositif de communication (4) configurée pour extraire les données de dispositif de terrain stockées dans l'unité de stockage (41), l'unité de réglage de dispositif de communication (4) étant configurée pour régler les données de dispositif de terrain sur le dispositif de communication (3) comme les données de dispositif de communication ;
**caractérisé en ce qu'**il comprend en outre
une unité de réglage de dispositif de terrain (6) configurée pour générer des données de dispositif de terrain liées à une étiquette de dispositif du dispositif de terrain,
l'unité de réglage de dispositif de terrain (6) étant configurée pour régler les données de dispositif de terrain sur le dispositif de terrain ;
l'unité de réglage de dispositif de communication (31) étant configurée pour extraire les données de dispositif de terrain stockées dans l'unité de stockage (41) en utilisant l'étiquette de dispositif comme une clé.

2. Système de communication de terrain selon la revendication 1, **caractérisé en ce que** l'unité de réglage de dispositif de communication (4) est configurée pour déterminer si oui ou non les données de dispositif de terrain correspondent aux données de dispositif de communication.

3. Système de communication de terrain selon la revendication 1, **caractérisé en ce que** les données de dispositif de terrain et les données de dispositif de communication comportent l'étiquette de dispositif qui est fixée au dispositif de terrain (11, 12, 13) respectivement.

4. Système de communication de terrain selon la revendication 1, **caractérisé en ce que** les données de dispositif de terrain et les données de dispositif de communication comportent une clé de jonction qui est générée automatiquement par l'unité de réglage de dispositif de terrain (6).

5. Système de communication de terrain selon la revendication 4, **caractérisé en ce que** les données de dispositif de terrain et la clé de jonction incluse dans les données de dispositif de terrain sont codées.

6. Système de communication de terrain selon la revendication 5, **caractérisé en ce que** l'unité de réglage de dispositif de communication (4) est configurée pour décoder les données de dispositif de terrain et la clé de jonction incluse dans les données de dispositif de terrain avant de déterminer si oui ou non les données de dispositif de terrain correspondent aux données de dispositif de communication.

7. Système de communication de terrain selon la revendication 1, **caractérisé en ce que** les données de dispositif de terrain, qui sont stockées dans l'unité de stockage (41), sont une partie d'une table dans laquelle une correspondance entre un groupe de données qui est nécessaire dans un contrôle de terrain et l'étiquette de dispositif est établie.

8. Procédé de communication de terrain destiné à être utilisé avec un système de communication de terrain ; le système selon la revendication 1, le procédé comprenant les étapes :
de stockage des données de dispositif de terrain ; et
d'extraction des données de dispositif de terrain qui avaient été stockées et de réglage des données de dispositif de terrain comme les données de dispositif de communication ;
**caractérisé en ce qu'**il comprend en outre
la génération de données de dispositif de terrain liées à une étiquette de dispositif du dispositif de terrain,
régler les données de dispositif de terrain sur le dispositif de terrain ; et
extraire les données de dispositif de terrain stockées dans l'unité de stockage (41) en utilisant l'étiquette de dispositif comme une clé.
